(19) Europäisches Patentamt
European Patent Office
Office européen des brevets

(11) Veröffentlichungsnummer : **0 160 723**
**B1**

(12) **EUROPÄISCHE PATENTSCHRIFT**

(45) Veröffentlichungstag der Patentschrift : **17.08.88**

(51) Int. Cl.$^4$ : **C 09 D 5/00**, C 09 D 3/68

(21) Anmeldenummer : **84105269.9**

(22) Anmeldetag : **09.05.84**

# (54) Lösungsmittelfreier Polymerisationslack und seine Verwendung.

(43) Veröffentlichungstag der Anmeldung : **13.11.85 Patentblatt 85/46**

(45) Bekanntmachung des Hinweises auf die Patenterteilung : **17.08.88 Patentblatt 88/33**

(84) Benannte Vertragsstaaten : **AT BE CH DE FR GB IT LI LU NL SE**

(56) Entgegenhaltungen :
**DE-A- 1 658 690**
**DE-A- 2 528 796**
**US-A- 3 046 851**

(73) Patentinhaber : **Kunststoff- & Lackfabrik Kemper**
**Holländische Strasse 36**
**D-3502 Vellmar/Obervellmar (DE)**

(72) Erfinder : **Kemper, Heinz B., Dr.rer.nat. Dipl. Chem.**
**Wigandstrasse 15a**
**D-3500 Kassel-Wilhelmshöhe (DE)**

(74) Vertreter : **von der Bey, Gerhard**
**Auenstrasse 31a**
**D-8012 Ottobrunn (DE)**

**EP 0 160 723 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Nach dem Entwurf zur DIN 55 945 vom Dezember 1981 sind Lacke Anstrichmittel, die Anstriche mit spezifischen Eigenschaften ergeben, beispielsweise einen gut verlaufenden, einwandfrei durchhärtenden Anstrich und einen je nach dem Verwendungszweck zu fordernden Widerstand gegen Witterungs- oder mechanische oder chemische Einflüsse. Die Einteilung der Lacke kann unter verschiedenen technischen Gesichtspunkten erfolgen. Lacke, die mittels einer Vernetzungsreaktion härten, werden beispielsweise als Polymerisationslacke bezeichnet. Die Bindemittelbasis für derartige Polymerisationslacke kann verschiedenartige Kunstharze umfassen, insbesondere Polyesterharze, die geeignet sind, aufgrund äthylenischer Ungesättigtheiten mit copolymerisierbaren Monomeren zu vernetzen und dadurch auszuhärten. Für die Lackhärtung sind energiereiche Stoffe als Härter erforderlich, die durch Wärme, Infrarot-, Ultraviolett- oder eine ionisierende Strahlung in Radikale zerfallen und ihre Energie auf die Monomeren übertragen, welch letztere dann mit den ungesättigten Polyesterharzen reagieren.

So werden in der DE-A-25 28 796 Überzugsmittel, insbesondere auf Holz-, Kunststoff-, Papier- oder Metallgrundlagen, beschrieben, die mittels Einwirkung von künstlich erzeugtem UV-Licht härtbar sind. Für Außenlacke sind diese Überzugsmittel nicht geeignet, denn aufgrund der verwendeten UV-Katalysatoren vergilben die damit hergestellten Überzüge sehr rasch, wenn sie ständig dem Einfluß von UV-Strahlen ausgesetzt sind. Diese Überzugsmittel sind auch nicht witterungsbeständig.

Bei der Verwendung von Polymerisationslacken, die Pigmente enthalten, bestehen jedoch Schwierigkeiten, weil die meisten Pigmente und Farbstoffe das üblicherweise zur Härtung erforderliche ultraviolette Licht remittieren und dadurch die Wirksamkeit des Härters nicht zur Geltung kommen lassen, insbesondere bei Anstrichen mit einer höheren Dicke, d. h. deckendpigmentierter Anstriche. Dieses Erfordernis ist besonders für Markierungen auf Straßen und Plätzen von wesentlicher Bedeutung.

Die bisher eingesetzten sogenannten Straßenmarkierungsfarben basieren auf Titandioxid, Zinkoxid, Magnesiumsilikat, Kieselgur, Dolomit- oder Quarzmehl als Pigmente und auf Alkydharzen, Chlorkautschuken, Chlorparaffinen, Epoxy- und Polyesterharzen oder Polyamidpulvern als Bindemittel und haben einen Lösungsmittelanteil von 30 bis 70 %. Beim Aufbringen derartiger Strassenmarkeriungsfarben verdunsten die Lösungsmittel, was zu Gesundheitsbeeinträchtigungen bei den mit dem Auftragen beschäftigten Arbeitern führen kann. Die Auftragsdicke solcher Straßenmarkierungsfarben beträgt etwa 0,4 mm, wird aber in etwa einem Jahr auf stark befahrenen Straßen, insbesondere Autobahnen, abgefahren. Man kennt auch dickere Schichten, die etwas länger halten, doch werden sie durch Heißplastiken gebildet, die kostspielig und arbeitsaufwendig in der Aufbringung sind.

Die Vermeidung der geschilderten Schwierigkeiten und Nachteile lag vorliegender Erfindung als Aufgabe zugrunde. Vor allen Dingen sollte ein pigmenthaltiger Lack ohne einen Gehalt an Lösungsmitteln zur Verfügung gestellt werden, der sich schnell verarbeiten läßt und in kurzer Zeit einen einwandfrei durchgehärteten Anstrich mit guter Witterungs- und mechanischer und chemischer Beständigkeit liefert.

Diese Aufgabe wird gelöst durch einen lösungsmittelfreien Polymerisationslack auf Basis von

(a) ungesättigten Polyesterharzen und damit polymerisierbaren Monomeren als Vernetzungsmittel,
(b) Lichtinitiatoren,
(c) Pigmenten,
(d) lichtleitenden Füllstoffen und gegebenenfalls
(e) Lackhilfsmitteln,

der das kennzeichnende Merkmal aufweist, daß der Polymerisationslack als Komponente (b) 2-Hydroxy-2-methyl-1-phenyl-propan-1-on und/oder eine Acylphosphinoxid-Verbindung, als Komponente (c) ein Weißpigment aus der Gruppe Magnesiumtitanat ($MgTiO_3$) und Titandioxid ($TiO_2$) vom Anatas-Typ und deren Gemische und als Komponente (d) Feldspat, Talkum, die praktisch frei von Eisen- und sonstigen Schwermetallverbindungen sind, Quarzmehl, Glasmehl, Glasfasermehl, Aluminiumhydroxid, Aluminiumsilicat-Pulver und/oder Borsilicatglasmehl enthält,

wobei die Volumenmenge der lichtleitenden Füllstoffe (d) das Fünffache bis mindestens ein Drittel der Volumenmenge der Pigmente (c) beträgt.

Polymerisationslacke nach der Erfindung sind frei von unerwünschten Lösungsmitteln und lassen sich trotz des Gehaltes an ultraviolettes Licht remittierenden Pigmenten durch die Einwirkung von Somenlicht, insbesondere aber von diffusem Tageslicht, als ultraviolettes Licht liefernde Quelle überraschenderweise in kurzer Zeit vollständig aushärten, so daß bereits nach etwa 15 Minuten nach dem Aufbringen des Lacks, beispielsweise auf eine Straße, eine Befahrbarkeit durch Kraftfahrzeuge gegeben ist.

Für die ungesättigten Polyesterharze der Komponente (a) eignen sich die üblichen ungesättigten Polykondensationsprodukte aus vorzugsweise Dicarbonsäuren und Glykolen. Als Dicarbonsäuren können auch deren veresterbare Derivate, insbesondere deren Anhydride, verwendet werden.

Bei den ungesättigten Polyesterharzen kann die Ungesättigtheit sowohl im Dicarbonsäureanteil als auch im Diolanteil liegen, vorzugsweise jedoch im Dicarbonsäureanteil.

Als Dicarbonsäuren, die olefinisch ungesättigt sind, werden vorzugsweise Maleinsäure, Maleinsäureanhydrid, Fumarsäure, Chlormaleinsäure, Itaconsäure oder Citraconsäure verwendet, während sozusagen als « gesättigte » Dicarbonsäuren Phthalsäure, Phthalsäureanhydrid, Isophthalsäure, Terephthalsä-

ure, Bernsteinsäure, Adipinsäure, Sebacinsäure oder Pimelinsäure verwendet werden. Das Verhältnis von gesättigten zu ungesättigten Dicarbonsäuren beträgt vorzugsweise 5 : 1 bis 5 : 10.

Als Glykole werden vorzugsweise Äthylenglykol, Propylenglykol, 1,3-Butylenglykol, Butendiol-1,4 und besonders bevorzugt Neopentylglykol verwendet.

Die Herstellung der ungesättigten Polyesterharze kann nach üblichen bekannten Verfahren erfolgen, wobei die Veresterungsreaktion so geführt wird, daß die ungesättigten Polyesterharze Säurezahlen von 15 bis 30 haben. Es gelangen vorzugsweise flüssige Polyesterharze zum Einsatz, jedoch können auch feste Polyesterharze verwendet werden, wenn sie in der Menge des zugesetzten Vernetzungsmittel löslich sind.

Für die mit den vorgenannten ungesättigten Polyesterharzen polymerisierbaren Monomeren, die als Vernetzungsmittel dienen, eignen sich aromatische und/oder aliphatische Vinylverbindungen, insbesondere Styrol, α-Methylstyrol, p-Chlorstyrol, Vinyltoluole, Divinylbenzol, Methacrylsäure-methylester und -n-butylester, Acrylsäure-tert.-butylester, das Reaktionsprodukt von Caprolacton und Acrylsäure, sowie Phthalsäure-diallylester. Um eine größere Härte der Polymerisationslacke zu erreichen, werden als Vernetzungsmittel di- und/oder trifunktionelle Acryl- und/oder Methacrylverbindungen, wie Hexandioldiacrylat, Trimethylolpropan-triacrylat, Tripropylenglycol-diacrylat und Triäthylenglycol-dimethacrylat sowie deren Gemisch auch mit den vorgenannten Vernetzungsmitteln, bevorzugt.

Diese aromatischen und/oder aliphatischen Vinylverbindungen liegen in einer Menge von 20 bis 75 Gewichtsprozent, vorzugsweise von 25 bis 60 Gewichtsprozent, bezogen auf das Gewicht der ungesättigten Polyesterharze, vor. Die Vernetzungsmittel können einzeln oder in Gemischen eingesetzt werden. Besonders bevorzugt ist Styrol.

Die Viskosität das Komponente (a) liegt im Bereich von 0,9 bis 3 Pa.s, vorzugsweise bis 2,5 Pa.s.

Eine besondere Bedeutung kommt den Lichtinitiatoren der Komponente (b) zu, denn sie dürfen bei der Vernetzungsreaktion zwischen den ungesättigten Polyesterharzen und den damit polymerisierbaren Monomeren keine vergilbten oder leicht zu vergilbenden Produkte liefern. Hierfür verwendet man nach der vorliegenden Erfindung 2-Hydroxy-2-methyl-1-phenyl-propan-1-on und/oder Acylphosphinoxid-Verbindungen, insbesondere solche der allgemeinen Formel

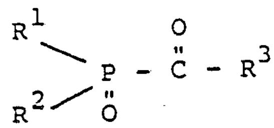

in der

$R^1$ für einen geradkettigen oder verzweigten Alkylrest mit 1 bis 6 Kohlenstoffatomen, einen Cyclohexyl-, Cyclopentyl-, Aryl-, halogen-, alkyl- oder alkoxyl-substituierten Aryl-, einen S- oder N-haltigen fünf- oder sechsgliedrigen heterocyclischen Rest steht ;

$R^2$ die Bedeutung von $R^1$ hat, wobei $R^1$ und $R^2$ untereinander gleich oder verschieden sein können, oder für einen Alkoxyrest mit 1 bis 6 Kohlenstoffatomen, für einen Aryloxy- oder einen Arylalkoxyrest steht, oder $R^1$ und $R^2$ unter Einbeziehung des Phosphoratoms zu einem Ring verbunden sind ;

$R^3$ für einen geradkettigen oder verzweigten Alkylrest mit 2 bis 18 Kohlenstoffatomen, einen 3 bis 10 Kohlenstoffatome enthaltenden cycloaliphatischen Rest, einen Phenyl- oder Naphthylrest, einen S-, O- oder N-haltigen fünf- oder sechsgliedrigen heterocyclischen Rest steht, wobei die Reste $R^3$ gegebenenfalls weitere Substituenten tragen können, oder für die Gruppierung

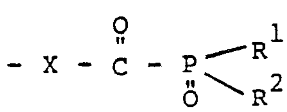

steht, worin $R^1$ und $R^2$ die oben angegebene Bedeutung haben und X für einen Phenylenrest oder einen 2 bis 6 Kohlenstoffatome enthaltenden aliphatischen oder cycloaliphatischen zweiwertigen Rest steht und gegebenenfalls einer oder mehrere der Reste $R^1$ bis $R^3$ olefinisch ungesättigt ist.

Derartige Acylphosphinoxid-Verbindungen sind aus der Europäischen Patentschrift Nr. 0 007 086 bekannt.

Bei den Polymerisationslacken gemäß vorliegender Erfindung haben sich die nachstehend aufgeführten Acylphosphinoxid-Verbindungen als besonders bevorzugt herausgestellt :

2,4,6-Trimethylbenzoyl-diphenylphosphinoxid,
2,6-Dimethoxybenzoyl-diphenylphosphinoxid,
2,6-Dichlorbenzoyl-diphenylphosphinoxid,
2,3,5,6-Tetramethylbenzoyl-diphenylphosphinoxid und
2,4,6-Trimethylbenzoyl-phenylphosphinsäure-methylester.

Gegebenenfalls können zusammen mit den vorgenannten Lichtinitiatoren auch andere bekannte Lichtinitiatoren mitverwendet werden, wie Benzildialkylketale, insbesondere Benzildimethylketal, und-

/oder Methylthioxanthon. Derartige Lichtinitiatoren dürfen jedoch nur in einer solchen Menge mitverwendet werden, daß das Gewichtsverhältnis von 2-Hydroxy-2-methyl-1-phenyl-propan-1-on und/oder der Acylphosphinoxid-Verbindung zu dem zusätzlichen Lichtinitiator höchstens 3 : 1 beträgt, denn bei höheren Mengen an zusätzlichen Lichtinitiatoren kann es zu einer Gelbstichigkeit der Polymerisationlacke kommen.

Das Gewichtsverhältnis der Komponente (a) zur Komponente (b) beträgt 100 zu 0,5 bis 100 zu 5.

Für die Pigmente der Komponente (c) verwendet man erfindungsgemäß Weißpigmente aus der Gruppe Magnesiumtitanat ($MgTiO_3$), Titandioxid ($TiO_2$) vom Anatas-Typ und deren Gemische. Diese Weißpigmente remittieren ultraviolettes Licht, so daß als Komponente (d) mindestens ein lichtleitender Füllstoff, nämlich Feldspat und Talkum, die besonders bevorzugt praktisch frei von Eisen- und sonstigen Schwermetallverbindungen sind, ferner Quarzmehl, Glasmehl, Glasfasermehl, Aluminiumhydroxid, Aluminiumsilicat-Pulver und/oder Borsilicatglasmehl, mitverwendet werden muß.

Als lichtleitende Füllstoffe werden besonders bevorzugt ein Feldspat in der Korngröße von 20 bis 30 µm und mit den Analysendaten 75,5 Prozent $SiO_2$, 14,7 Prozent $Al_2O_3$, 0,13 Prozent $Fe_2O_3$, 0,2 Prozent CaO, 0,1 Prozent MgO, 4,2 Prozent $K_2O$, 4,8 Prozent $Na_2O$ und einem Glühverlust von 0,5 Prozent, weil er wegen seiner Mohs-Härte von 6 bis 6,5 den Polymerisationslacken eine hohe Abriebfestigkeit verleiht, und ein Talkum mit etwa 61 Prozent $SiO_2$, 31 Prozent MgO, 1 bis 5 Prozent $Al_2O_3$ und 1 bis 5 Prozent $H_2O$ verwendet. Das Quarzmehl soll vorzugsweise aus 99,5 Prozent $SiO_2$ bestehen. Für das Glasmehl und das Glasfasermehl eignen sich Normalglaspulver oder Normalglasfasern mit einer Länge unter 0,5 mm mit einem Gehalt von 73 Prozent $SiO_2$, 15 Prozent $Na_2O$ und 12 Prozent CaO. Das Aluminium-silicat-Pulver soll vorzugsweise eine Zusammensetzung von 57 Prozent $SiO_2$, 20 Prozent $Al_2O_3$, 4 Prozent $B_2O_3$, 5 Prozent CaO und 12 Prozent MgO aufweisen. Für das Borsilicatglasmehl eignet sich ein Ausgangsprodukt von 70 bis 80 Prozent $SiO_2$, 2 bis 7 Prozent $Al_2O_3$ und 7 bis 13 Prozent $B_2O_3$.

Die Korngröße der Pigmente beträgt 5 bis 100 µm und diejenige der lichtleitenden Füllstoffe 0,5 bis 100 µm. Je nach der Korngröße und/oder der Oberflächenbeschaffenheit der Pigmente und bzw. oder der lichtleitenden Füllstoffe richtet sich auch die Einstellung der Viskosität der Komponente (a), denn die Viskosität des Polymerisationslacks soll zweckmäßigerweise aus anwendungstechnischen Gründen bei 0,9 bis 3 Pa.s, vorzugsweise bis 2,5 Pa.s, liegen.

Eine besondere Bedeutung bei vorliegender Erfindung kommt der volumenmäßigen Menge der lichtleitenden Füllstoffe im Verhältnis zur volumenmäßigen Menge der Pigmente zu. Die Volumenmenge der lichtleitenden Füllstoffe muß mindestens ein Drittel der Volumenmenge der Pigmente betragen. Die obere Grenze liegt aus anwendungstechnischen Gründen bei den lichtleitenden Füllstoffen beim Fünffachen der Volumenmenge der Pigmente. Polymerisationslacke ohne Mitverwendung der lichtleitenden Füllstoffe lassen sich nur bis zu einer Dicke von höchstens 0,2 mm im diffusen Tageslicht härten.

Die lösungsmittelfreien Polymerisationslacke nach vorliegender Erfindung können außerdem noch Lackhilfsmittel enthalten. Als Lackhilfsmittel werden in erster Linie Absetzverhinderungsmittel, Hautbildungsmittel, Verdickungsmittel (Thixotropiemittel), Benetzungsmittel, Entlüftungsmittel, Verlaufmittel und Elastizitätsmodifizierungsmittel bezeichnet. Insgesamt können derartige Lackhilfsmittel in einer Menge bis zu 30 Gewichtsprozent, bezogen auf das Gewicht der Komponenten (a) und (b) vorliegen, wenn man Elastizitätsmodifizierungsmittel mitverwendet.

Für Absetzverhinderungsmittel haben sich dehydratisiertes Ricinusöl, Bentonite und hochdisperse Kieselsäure als vorteilhaft erwiesen. Hochdisperse Kieselsäure ist besonders bevorzugt, weil sie gleichzeitig auch als Mattierungs- und Verdickungsmittel fungiert. Sie wird in einer Menge von 1 bis 4 Gewichtsprozent, bezogen auf die Komponente (a) eingesetzt, während die anderen Absetzverhinderungsmittel in Mengen von 0,5 bis 4,5 Gewichtsprozent vorliegen können.

Als Hautbildungsmittel werden Wachse, Paraffine — vorzugsweise vom Fp. 46 bis 72 °C — sowie Polyäthylenwachse in Mengen von 0,05 bis 4 Gewichtsprozent, bezogen auf das Gewicht der Komponente (a), mitverwendet.

Außer hochdisperser Kieselsäure werden Magnesiumoxid-Pulver oder Magnesiumstearat, das gleichzeitig als Mattierungsmittel und Absetzverhinderungsmittel dienen kann, in Mengen von 0,5 bis 4,5 Gewichtsprozent, bezogen auf das Gewicht der Komponente (a), eingesetzt.

Ferner können als Lackhilfsmittel Benetzungsmittel, insbesondere und bevorzugt nicht-ionogene Tenside, nämlich fluorierte Alkylester, und/oder Siliconöle, außerdem Entlüftungsmittel, wobei inerte und mit der Komponente (a) unverträgliche Polyacrylate in feindispergierter Form besonders bevorzugt sind, und schließlich Verlaufsmittel, wie Silicone, zugegeben werden.

Wenn die erfindungsgemäßen lösungsmittelfreien Polymerisationslacke bei tiefen Temperaturen aufgebracht werden sollen, hat sich die Mitverwendung eines Elastizitätsmodifizierungsmittel als besonders vorteilhaft erwiesen. Als Elastizitätsmodifizierungsmittel eignen sich besonders Polyurethane, die in einer Menge von vorzugsweise 10 bis 25 Gewichtsprozent, bezogen auf das Gewicht der Komponenten (a) und (b), vorliegen können.

Die Polyurethane weisen vorzugsweise ein Molekulargewicht von 2000 bis 4000 auf und sind entweder flüssig oder in dem Vernetzungsmittel löslich. Sie basieren auf aliphatischen oder aromatischen Di- und Triisocyanaten, wie Toluylen-2,4-diisocyanat, Toluylen-2,6-diisocyanat oder deren Gemische, einzelne Diphenylmethan-diisocyanate oder deren Gemische, Isophoron-diisocyanat, Trimethyl-hexamethylen-diisocyanat und ein Addukt von m- oder p-Tetramethylxylol-diisocyanat an Trimethylolpropan,

und einem langkettigen Polyol (mit mindestens 5 Kohlenstoffatomen) und/oder Polyätherpolyol. Sie werden in üblicher Weise, gegebenenfalls in Gegenwart eines Reaktionsbeschleunigers, unter Bildung von freie Isocyanatgruppen aufweisenden Präpolymerisaten hergestellt. Anschließend werden die Präpolymerisate bis zur Absättigung mit einem Amin, Polyamin, Polyol, Polyätherpolyol und/oder Caprolactonacrylat umgesetzt. Hierbei hat es sich als besonders zweckmäßig erwiesen, daß bei einer Umsetzung der Präpolymerisate das Amin und/oder das Polyamin in dem Vernetzungsmittel gelöst zugegeben wird, um eine Gelbildung zu vermeiden.

Es ist wesentlich, daß die Polyurethane keine freien Isocyanatgruppen aufweisen, bevor sie mit den ungesättigten Polyesterharzen und dem Vernetzungsmittel zusammengebracht werden, weil sonst die freien Isocyanatgruppen mit den ungesättigten Polyesterharzen reagieren. Es bilden sich hierbei verlängerte Ketten, die zu festen und in der einzusetzenden Menge Vernetzungsmittel kaum oder nur sehr schwer löslich sind. Man erzielt mit in der Kette verlängerten ungesättigten Polyesterharzen keine Polymerisationslacke nach der Erfindung bezüglich ihrer Elastizitätseigenschaften.

Die Mitverwendung derartiger Polyurethane hat den weiteren Vorteil, daß sie das Haftvermögen des Polymerisationslacks verbessern. Es wurde nämlich gefunden, daß durch die Mitverwendung von bevorzugt flüssigen Polyurethanen sowie gegebenenfalls durch die Verwendung von Phthalsäurediallylester als Vernetzungsmittel bei den ungesättigten Polyesterharzen Polymerisationslacke erhalten werden, die auch bei Temperaturen von —32 °C und bei diffusem Tageslicht in sehr kurzer Zeit einen festhaftenden und elastischen Polymerisationslack ergeben.

Wenn es erforderlich sein sollte, daß der Polymerisationslack eine andere Farbe als reines Weiß besitzt, nämlich beispielsweise Gelb, so ist die Mitverwendung von Chromoxidgelb oder von transparenten organischen Gelbfarbstoffen, wie Zaponechtgelb, vorgesehen. Auf jeden Fall müssen die Farbstoffe kurzwelliges Licht durchlassen.

Bei der Verwendung der erfindungsgemäßen Polymerisationslacke als Markierungsfarbe für Straßen und Plätze hat es sich weiterhin als vorteilhaft gezeigt, daß auf der Oberfläche des aufgebrachten Lackfilms sofort nach dem Aufbringen lichtreflektierende Glaskügelchen eingebettet werden, deren Durchmesser 5 bis 600 µm, vorzugsweise 400 bis 600 µm, beträgt. Die Glaskügelchen können auch sofort beim Aufbringen des Polymerisationslacks auf üblichen fahrbaren Spritzmaschinen auf die Oberfläche des aufgebrachten Lacks aufgestreut werden.

Es ist weiterhin gefunden worden, daß die lösungsmittelfreien Polymerisationslacke nach der Erfindung bei einer Auftragsstärke von 3,5 mm sehr schnell durchhärten. Die Schichtdicke kann auch bis zu 7 mm betragen, wenn der Anteil der lichtleitenden Füllstoffe das Doppelte bis Fünffache des Pigmentanteils ausmacht. Auch dann ist noch eine Durchhärtung der Polymerisationslacke in kurzer Zeit gewährleistet.

Allgemin wurde gefunden, daß je stärker die Auftragsdicke des Polymerisationslacks sein soll, umso höher der Anteil der lichtleitenden Füllstoffe, bezogen auf die Volumenmenge des verwendeten Pigments, sein muß.

Die Polymerisationslacke nach vorliegender Erfindung können als Zweikomponentenlack gelagert werden, wobei der Lichtinitiator getrennt von den übrigen Bestandteilen gehalten wird. Vorzugsweise werden jedoch die erfindungsgemäßen lösungsmittelfreien Polymerisationslacke als Einkomponentenlacke eingesetzt, wobei jedoch die Mitverwendung eines Stabilisators erforderlich ist, um eine mögliche vorzeitige Vernetzungsreaktion und damit verbunden eine Aushärtung zu vermeiden. Für die Stabilisierung kommen übliche Stabilisatoren in Betracht, die in einer Menge von 0,01 bis 0,2 Gewichtsprozent zugefügt werden, bezogen auf das Gewicht der ungesättigten Polyesterharze. In erster Linie sind dies Hydrochinon, Brenzkatechin, substituierte Hydrochinone und Brenzkatechine, Äthylnitrit und deren Gemische.

Nachstehend wird eine Rahmenrezeptur für lösungsmittelfreie Polymerisationslacke nach vorliegender Erfindung angegeben :

1 000 g eines ungesättigten Polyesterharzes auf Basis von Maleinsäureanhydrid-Adipinsäure-Neopentylglycol mit einem Gehalt von 30 bis 35 Gewichtsprozent Styrol,
50 g einer 10 prozentigen Paraffinlösung in Styrol (Paraffin vom Fp. 46-62 °C),
10 - 15 g hochdisperse Kieselsäure als Absetzverhinderungsmittel und Thixotropiemittel,
5 - 50 g einer Acylphosphinoxid-Verbindung gemäß der Europäischen Patentschrift Nr. 0 007 086.

Zu dieser Mischung werden entweder
50 - 150 g $MgTiO_3$ als Weißpigment,
150 - 500 g Talkum (frei von Eisenverbindungen),
25 - 75 g Glasfasermehl (kleiner als 0,5 mm) aus Borsilicalglas mit weniger als 1 Gewichtsprozent $K_2O$ und $Na_2O$ ;
oder
50 - 150 g $TiO_2$ vom Anatas-Typ als Weißpigment,
200 - 600 g Talkum (frei von Eisenverbindungen),
10 - 20 g MgO,
100 - 300 g Aluminiumhydroxid (kleiner als 10 µm)
gegeben.

Polymerisationslacke auf dieser Basis härten in einem Temperaturbereich von —2 °C bis + 50 °C auch bis zu einer Schichtdicke von 7 mm bei diffusem Tageslicht durch. Ein Verdunsten des Vernetzungsmittels Styrol ist nicht meßbar, liegt also unterhalb 0,1 Prozent.

Zur Erhöhung der Elastizität — beispielsweise bei Temperaturen von —32 °C —, zur Haftverbesserung und zur Verbesserung der Abrieb- und Verschleißfestigkeit des Polymerisationslackes werden Polyurethane von Basis von Trimethyl-hexamethylen-diisocyanat, Toluylen-diisocyanat (vorzugsweise ein Gemisch aus den 2,4- und 2,6-Isomeren), Isophoron-diisocyanat oder von einem Addukt von m- oder p-Tetramethylxylol-diisocyanat an Trimethylolpropan mitverwendet.

Die Beispiele erläutern die Erfindung.

Beispiel 1

Zu 1 000 g einer Lösung eines ungesättigten Polyesterharzes auf Basis Adipinsäure und Maleinsäureanhydrid (im Verhältnis 3 : 1, bezogen auf das Gewicht) und Neopentylglycol in Styrol mit einem Polyestergehalt von 65 Prozent werden 50 g einer 10 prozentigen Paraffinlösung in Styrol (Fp. der Paraffine : 46 bis 62 °C), 12 g hochdisperse Kieselsäure und 40 g 2,4,6-Trimethylbenzoyl-diphenylphosphinoxid gegeben. Nach guter Durchmischung fügt man 100 g Magnesiumtitanat ($MgTiO_3$), 500 g Talkum (praktisch frei von Eisen- und sonstigen Schwermetallverbindungen) und 50 g Glasfasermehl Stapellänge unter 0,5 mm, Faserdurchmesser 0,6 bis 10 µm aus Borsilicatglas (mit weniger als 1 Gewichtsprozent $K_2O$ und $Na_2O$) hinzu.

Dem Gemisch werden unmittelbar vor dem Aufbringen auf eine Straße zur Anbringung eines Mittelstreifens — gegebenenfalls mittels einer gesonderten und getrennten Vorrichtung Glaskügelchen mit einem Durchmesser von etwa 100 bis 150 µm zugegeben. Der Auftrag härtet bei diffusem Tageslicht innerhalb von 15 Minuten bei einer Auftragsdicke von etwa 3 mm vollständig durch.

Beispiel 2

Das Beispiel 1 wird wiederholt jedoch mit der Maßgabe, daß anstelle von Talkum Feldspat (praktisch frei von Eisen- und sonstigen Schwermetallverbindungen) in einer Korngröße von 20 bis 30 µm verwendet wird.

Man erhält eine Straßenmarkierungsfarbe mit höherer Abriebfestigkeit.

Beispiel 3

Das Beispiel 2 wird wiederholt, jedoch mit der Maßgabe, daß als Lichtinitiator 2-Hydroxy-2-methyl-1-phenyl-propan-1-on verwendet wird.

Die Straßenmarkierungsfarbe härtet unter den in Beispiel 1 angegebenen Bedingungen in einer Zeit von etwa 20 Minuten bei einer Auftragsdicke von 3,5 mm vollständig durch.

Beispiel 4

Das Beispiel 1 wird wiederholt, jedoch mit der Maßgabe, daß als Lichtinitiator ein Gemisch aus 30 g 2,6-Dimethoxybenzoyl-diphenyl-phosphinoxid und 10 g Benzildimethylketal verwendet wird.

Beispiel 5

Das Beispiel 4 wird wiederholt, jedoch mit der Maßgabe, daß anstelle von Benzildimethylketal 10 g Methylthioxanthon verwendet wird.

Beispiel 6

Das Beispiel 1 wird wiederholt, jedoch mit der Maßgabe, daß zusätzlich ein transparenter organischer Gelbfarbstoff (Zaponechtgelb) in der gleichen Menge wie das Magnesiumtitanat zugegeben wird. Man erhält eine gelbe Straßenmarkierungsfarbe.

Beispiel 7

Das Beispiel 3 wird wiederholt, jedoch mit der Maßgabe, daß anstelle von Magnesiumtitanat die gleiche Menge Titandioxid ($TiO_2$) vom Anatas-Typ verwendet wird. Man erhält die gleichen Ergebnisse, wie sie in Beispiel 3 angegeben sind.

Beispiel 8

1 Mol eines Diisocyanat-Addukts aus Isophorondiisocyanat und einem Polytetramethylenätherglycol vom Molekulargewicht 1 000 mit einem Gehalt von 4 Prozent freie Isocyanatgruppen wird mit Styrol

versetzt, so daß eine 70 prozentige Lösung entsteht. Diese Lösung wird mit weiterem Polytetramethylenätherglycol in Gegenwart von Dibutyl-zinn-dilaurat umgesetzt, bis keine freien Isocyanatgruppen vorhanden sind.

Die erhaltene Lösung des Polyurethans wird als Elastizitätsmodifizierungsmittel in einer Menge von 200 g der in Beispiel 1 genannten Rezeptur zugefügt. Durch diesen Zusatz wird die Flexibilität in der Kälte von —5 °C auf —29 °C verbessert. Mit einer derartigen Rezeptur können die Straßenmarkierungsfarben auch bei tiefen Temperaturen, zum Beispiel bei strengem Frost im Winter, aufgebracht werden und weisen bei diesen Temperaturen eine gute Haftfestigkeit und Abriebbeständigkeit auf.

### Beispiel 9

Das in Beispiel 8 beschriebene Diisocyanat-Addukt wird mit Phthalsäure-diallylester versetzt, so daß eine 75 prozentige Lösung entsteht. Diese Lösung wird mit Polyamin (20 prozentige Lösung in monomerem Caprolacton-acrylat vom Molekulargewicht 344) in Gegenwart von Dibutyl-zinn-dilaurat als Reaktionsbeschleuniger umgesetzt, bis keine freien Isocyanatgruppen mehr vorhanden sind. Die Reaktion des Diisocyanat-Addukts erfolgt sowohl mit dem Polyamin als auch mit den Hydroxylgruppen des monomeren Caprolacton-acrylats.

300 g der vorgenannten Polyurethanlösung werden mit 1 200 g einer 65 prozentigen Lösung des in Beispiel 1 genannten ungesättigten Polyesterharzes in Triäthylenglycol-dimethacrylat gründlich vermischt. Dann gibt man 25 g 2,6-Dimethoxybenzoyl-diphenylphosphinoxid, 15 g 2-Hydroxy-2-methyl-1-phenyl-propan-1-on und 6 g Benzildimethylketal als Lichtinitiatoren hinzu und mischt gründlich durch.

Nach weiterer Zugabe von 150 g Magnesiumtitanat ($MgTiO_3$), 400 g Talkum, 100 g Glasmehl, 15 g hochdisperser Kieselsäure, 10 g Paraffin vom Fp. 46 bis 72 °C wird die Gesamtmischung in einer Homogenisieranlage (Kugelmühle) verarbeitet. Nach Zugabe von 0,05 Gewichtsprozent n-Butylcatechol erhält man einen lichthärtenden Polymerisationslack mit guter Lagerstabilität, der praktisch geruchsfrei für Straßenmarkierungen zu verwenden ist. Bei diffusem Tageslicht tritt vollständige Härtung bei Schichtdicken von 0,5 bis 2 mm innerhalb von 15 Minuten ein.

Unmittelbar nach oder bei dem Auftragen des Polymerisationslacks, das heißt vor Härtungsbeginn — werden Glaskügelchen (Glasreflexperlen) mit einem Durchmesser von 100 bis 200 µm auf die Oberfläche des Polymerisationslacks aufgestreut, um die Sichtbarkeit der Straßenmarkierungsfarbe in der Dunkelheit zu verbessern.

### Beispiele 10 und 11

Die Beispiele 8 und 9 werden wiederholt, jedoch mit der Maßgabe, daß anstelle eines Diisocyanat-Addukts auf Basis von Isophorondiisocyanat ein Diisocyanat-Addukt auf Basis von Toluylen-diisocyanat (ein im Handel erhältliches Gemisch der 2,4- und 2,6-Isomeren) verwendet wird. Man erhält praktisch die gleichen Ergebnisse.

### Beispiele 12 bis 35

Die Beispiele 8, 9, 10 und 11 werden wiederholt, jedoch jeweils mit den in den Beispielen 2, 3, 4, 5, 6 und 7 genannten Änderungen.

### Beispiele 36 bis 37

Die Beispiel 1 bis 35 werden wiederholt, jedoch mit der Maßgabe, daß anstelle von Feldspat oder Talkum als lichtleitende Füllstoffe Aluminiumhydroxyd-Pulver oder Aluminiumsilicat-Pulver, letzteres gegebenenfalls in Mischung mit anderen lichtleitenden Füllstoffen, verwendet werden.

### Beispiel 38

Durch Zusatz von 1 bis 4 Gewichtsprozent, vorzugsweise 3 Gewichtsprozent, Magnesiumoxid zu den in den Beispielen 1 bis 37 genannten Rezepturen werden Polymerisationslacke erhalten, die an geneigten oder senkrechten Flächen festhaftend auftragbar sind.

## Patentansprüche

1. Lösungsmittelfreier Polymerisationslack auf Basis von
   (a) ungesättigten Polyesterharzen und damit polymerisierbaren Monomeren als Vernetzungsmittel,
   (b) Lichtinitiatoren,
   (c) Pigmenten,
   (d) lichtleitenden Füllstoffen und gegebenenfalls
   (e) Lackhilfsmitteln,

dadurch gekennzeichnet, daß der Polymerisationslack als Komponente (b) 2-Hydroxy-2-methyl-1-phenyl-propan-1-on und/oder eine Acylphosphinoxid-Verbindung, als Komponente (c) ein Weißpigment aus der Gruppe Magnesiumtitanat ($MgTiO_3$) und Titandioxid ($TiO_2$) vom Anatas-Typ und deren Gemische und als Komponente (d) Feldspat, Talkum, die praktisch frei von Eisen- und sonstigen Schwermetallverbindungen sind, Quarzmehl, Glasmehl, Glasfasermehl, Aluminiumhydroxid, Aluminiumsilicat-Pulver und/oder Borsilicatglasmehl enthält, wobei die Volumenmenge der lichtleitenden Füllstoffe (d) das Fünffache bis mindestens ein Drittel der Volumenmenge der Pigmente (c) beträgt.

2. Polymerisationslack nach Anspruch 1, dadurch gekennzeichnet, daß das ungesättigte Polyesterharz aus gesättigten und ungesättigten Dicarbonsäuren und/oder deren Anhydriden und Diolen besteht, wobei das Verhältnis von gesättigten zu ungesättigten Dicarbonsäuren 5 : 1 bis 5 : 10 beträgt.

3. Polymerisationslack nach den Ansprüchen 1 bis 2, dadurch gekennzeichnet, daß das Vernetzungsmittel für die ungesättigten Polyesterharze mindestens eine aromatische und/oder aliphatische Vinylverbindung ist und in einer Menge von 20 bis 75 Gewichtsprozent, bezogen auf das Gewicht der Polyesterharze, vorliegt.

4. Polymerisationslack nach den Ansprüchen 1 bis 3, dadurch gekennzeichnet, daß er als Acylphosphinoxid-Verbindung eine Verbindung der allgemeinen Formel

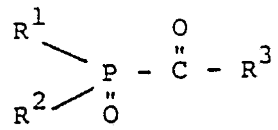

enthält, in der

$R^1$ für einen geradkettigen oder verzweigten Alkylrest mit 1 bis 6 Kohlenstoffatomen, einen Cyclohexyl-, Cyclopentyl-, Aryl-, halogen-, alkyl- oder alkoxyl-substituierten Aryl-, einen S- oder N-haltigen fünf- oder sechsgliedrigen heterocyclischen Rest steht;

$R_2$ die Bedeutung von $R^1$ hat, wobei $R^1$ und $R^2$ untereinender gleich oder verschieden sein können, oder für einen Alkoxyrest mit 1 bis 6 Kohlenstoffatomen, für einen Aryloxy- oder einen Arylalkoxyrest steht, oder $R^1$ und $R^2$ unter Einbeziehung des Phosphoratoms zu einem Ring verbunden sind;

$R^3$ für einen geradkettigen oder verzweigten Alkylrest mit 2 bis 18 Kohlenstoffatomen, einen 3 bis 10 Kohlenstoffatome enthaltenden cycloaliphatischen Rest, einen Phenyl- oder Naphthylrest, einen S-, O- oder N-haltigen fünf- oder sechsgliedrigen heterocyclischen Rest steht, wobei die Reste $R^3$ gegebenenfalls weitere Substituenten tragen können, oder für die Gruppierung

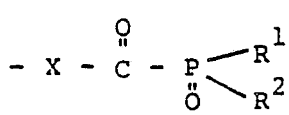

steht, worin $R^1$ und $R^2$ die oben angegebene Bedeutung haben und X für einen Phenylrest oder einen 2 bis 6 Kohlenstoffatome enthaltenden aliphatischen oder cycloaliphatischen zweiwertigen Rest steht und gegebenenfalls einer oder mehrere der Reste $R^1$ bis $R^3$ olefinisch ungesättigt ist.

5. Polymerisationslack nach Anspruch 4, dadurch gekennzeichnet, daß er als zusätzlichen Lichtinitiator ein Benzil-dialkylketal und/oder Methylthioxanthon enthält.

6. Polymerisationslack nach den Ansprüchen 4 bis 5, dadurch gekennzeichnet, daß das Gewichtsverhältnis von Acylphosphinoxid-Verbindung und/oder 2-Hydroxy-2-methyl-1-phenyl-propan-1-on zum zusätzlichen Lichtinitiator höchstens 3 : 1 beträgt.

7. Polymerisationslack nach den Ansprüchen 1 bis 6, dadurch gekennzeichnet, daß das Gewichtsverhältnis von Komponente (a) zu Komponente (b) 100 : 0,5 bis 100 : 5 beträgt.

8. Polymerisationslack nach den Ansprüchen 1 bis 7, dadurch gekennzeichnet, daß er einen Anteil von 20 bis 120 Gewichtsteile der Komponenten (c) und (d) auf 100 Gewichtsteile der Komponente (a) aufweist.

9. Polymerisationslack nach den Ansprüchen 1 bis 8, dadurch gekennzeichnet, daß er als Lackhilfsmittel Absetzverhinderungsmittel, Hautbildungsmittel, Mattierungsmittel, Verdickungsmittel, Elastizitätsmodifizierungsmittel und/oder Farbstoffe enthält.

10. Polymerisationslack nach Anspruch 9, dadurch gekennzeichnet, daß er als Absetzverhinderungsmittel, Mattierungsmittel und/oder Verdickungsmittel hochdisperse Kieselsäure enthält.

11. Polymerisationslack nach Anspruch 10, dadurch gekennzeichnet, daß er hochdisperse Kieselsäure in einer Menge von 0,05 bis 5 Gewichtsprozent enthält, bezogen auf das Gewicht der Komponente (a).

12. Polymerisationslack nach den Ansprüchen 9 bis 11, dadurch gekennzeichnet, daß er dehydratisiertes Ricinusöl und bzw. oder Bentonite als Absetzverhinderungsmittel enthält.

13. Polymerisationslack nach Anspruch 9, dadurch gekennzeichnet, daß er als Hautbildungsmittel Wachse, Polyäthylenwachse und/oder Paraffine vom Fp. 46 bis 72 °C enthält.

14. Polymerisationslack nach Anspruch 13, dadurch gekennzeichnet, daß er das Hautbildungsmittel

in einer Menge von 0,05 bis 4 Gewichtsprozent enthält, bezogen auf das Gewicht der Komponente (a).

15. Polymerisationslack nach den Ansprüchen 13 und 14, dadurch gekennzeichnet, daß er Wachs, das in dem Vernetzungsmittel gelöst ist, enthält.

16. Polymerisationslack nach den Ansprüchen 9 bis 11, dadurch gekennzeichnet, daß er als Verdickungsmittel Magnesiumoxid-Pulver enthält.

17. Polymerisationslack nach Anspruch 16, dadurch gekennzeichnet, daß er ein Verdickungsmittel in einer Menge von 0,5 bis 4,5 Gewichtsprozent enthält, bezogen auf das Gewicht der Komponente (a).

18. Polymerisationslack nach Anspruch 9, dadurch gekennzeichnet, daß er als Elastizitätsmodifizierungsmittel ein Polyurethan enthält, das aus einem aliphatischen oder aromatischen Di- oder Triisocyanat und einem langkettigen Polyol, Polyäther und/oder Polyätherpolyol, gegebenenfalls in Gegenwart eines Reaktionsbeschleunigers, unter Bildung eines freie Isocyanatgruppen aufweisenden Präpolymerisats und anschließendem Umsetzen des Präpolymerisats bis zur Absättigung mit einem Polyol, Polyätherpolyol, Amin, Polyamin und/oder Caprolacton-acrylat hergestellt worden ist.

19. Polymerisationslack nach Anspruch 18, dadurch gekennzeichnet, daß er ein Elastizitätsmodifizierungsmittel in einer Menge bis zu 25 Gewichtsprozent enthält, bezogen auf das Gewicht der Komponente (a).

20. Polymerisationslack nach den Ansprüchen 9 bis 19, dadurch gekennzeichnet, daß er Lackhilfsstoffe in einer Gesamtmenge bis zu 35 Gewichtsprozent enthält, bezogen auf das Gewicht der Komponente (a).

21. Polymerisationslack nach den Ansprüchen 1 bis 20, dadurch gekennzeichnet, daß er als zusätzliches Pigment und bzw. oder als Farbstoff Chromoxidgelb und/oder transparente organische Gelbfarbstoffe enthält.

22. Polymerisationslack nach den Ansprüchen 1 bis 21, dadurch gekennzeichnet, daß er auf seiner Oberfläche lichtreflektierende Glaskügelchen enthält.

23. Polymerisationslack nach Anspruch 22, dadurch gekennzeichnet, daß er Glaskügelchen mit einem Durchmesser von 5 bis 600 μm enthält.

24. Verwendung des lösungsmittelfreien Polymerisationslacks nach den Ansprüchen 1 bis 23 zur Anbringung von Markierungen auf Straßen und Plätzen.

**Claims**

1. A solventless polymerization lacquer based on
   (a) unsaturated polyester resins and monomers polymerizable therewith as crosslinking agents,
   (b) photoinitiators,
   (c) pigments,
   (d) photoconductive fillers and, optionally,
   (e) lacquer auxiliaries,

characterized in that the polymerization lacquer contains as component (b) 2-hydroxy-2-methyl-1-phenylpropan-1-one and/or an acyl phosphine oxide compound, as component (c) a white pigment from the group comprising magnesium titanate ($MgTiO_3$) and titanium dioxide ($TiO_2$) of the anatase type and mixtures thereof and as component (d) feldspar, talcum, which are substantially free from iron and other heavy-metal compounds, quartz powder, glass powder, glass fiber powder, aluminium hydroxide, aluminium silicate powder and/or boron silicate glass powder, the quantity by volume of the photoconductive fillers (d) being five times to at least one third of the quantity by volume of the pigments (c).

2. A polymerization lacquer as claimed in Claim 1, characterized in that the unsaturated polyester resin consists of saturated and unsaturated dicarboxylic acids and/or their anhydrides and diols, the ratio of saturated to unsaturated dicarboxylic acids being 5 : 1 to 5 : 10.

3. A polymerization lacquer as claimed in Claims 1 and 2, characterized in that the crosslinking agent for the unsaturated polyester resins is at least one aromatic and/or aliphatic vinyl compound and is present in a quantity of 20 to 75 % by weight, based on the weight of the polyester resins.

4. A polymerization lacquer as claimed in Claims 1 to 3, characterized in that it contains as the acyl phosphine oxide compound a compound corresponding to the following general formula

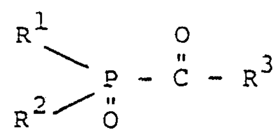

in which

$R^1$ is a linear or branched $C_1$-$C_6$ alkyl radical, a cyclohexyl, cyclopentyl, aryl, halogen-, alkyl- or alkoxyl-substituted aryl radical, an S- or N-containing five- or six-membered heterocyclic radical ;

$R^2$ has the meaning as $R^1$, $R^1$ and $R^2$ being the same as or different from one another, or is a $C_1$-$C_6$ alkoxy radical, an aryloxy or an arylalkoxy radical, or $R^1$ and $R^2$ including the phosphorus atom are joined

to form a ring ;

$R^3$ is a linear or branched $C_2$-$C_{18}$ alkyl radical, a $C_3$-$C_{10}$ cycloaliphatic radical, a phenyl or naphthyl radical, an Si-, O- or N-containing five- or six-membered heterocyclic radical, the radicals $R^3$ optionally containing further substituents, or the group

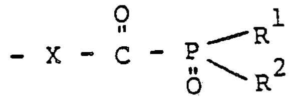

in which $R^1$ and $R^2$ are as defined above and X is a phenyl radical or a $C_2$-$C_6$ aliphatic or cycloaliphatic difunctional radical and one or more of the radicals $R^1$ to $R^3$ is/are optionally olefinically unsaturated.

5. A polymerization lacquer as claimed in Claim 4, characterized in that it contains a benzil dialkyl ketal and/or methyl thioxanthone as an additional photoinitiator.

6. A polymerization lacquer as claimed in Claims 4 and 5, characterized in that the ratio by weight of acyl phosphine oxide compound and/or 2-hydroxy-2-methyl-1-phenylpropan-1-one to the additional photoinitiator is at most 3 : 1.

7. A polymerization lacquer as claimed in Claims 1 to 6, characterized in that the ratio by weight of component (a) to component (b) is 100 : 0.5 to 100 : 5.

8. A polymerization lacquer as claimed in Claims 1 to 7, characterized in that it contains 20 to 120 parts by weight of components (c) and (d) to 100 parts by weight of component (a).

9. A polymerization lacquer as claimed in Claims 1 to 8, characterized in that it contains anti-setting agents, skin-forming agents, dulling agents, thickeners, elasticity modifiers and/or dyes as lacquer auxiliaries.

10. A polymerization lacquer as claimed in Claim 9, characterized in that it contains highly disperse silica as anti-setting agent, dulling agent and/or thickener.

11. A polymerization lacquer as claimed in Claim 10, characterized in that it contains highly disperse silica in a quantity of 0.05 to 5 % by weight, based on the weight of component (a).

12. A polymerization lacquer as claimed in Claims 9 to 11, characterized in that it contains dehydrated castor oil and/or bentonites as anti-setting agents.

13. A polymerization lacquer as claimed in Claim 9, characterized in that contains waxes, polyethylene waxes and/or paraffins melting at 46 to 47 °C as skin-forming agents.

14. A polymerization lacquer as claimed in Claim 13, characterized in that it contains the skin-forming agent in a quantity of 0.5 to 4 % by weight, based on the weight of component (a).

15. A polymerization lacquer as claimed in Claims 13 and 14, characterized in that it contains wax in solution in the crosslinking agent.

16. A polymerization lacquer as claimed in Claims 9 to 11, characterized in that it contains magnesium oxide powder as thickener.

17. A polymerization lacquer as claimed in Claim 16, characterized in that it contains a thickener in a quantity of 0.5 to 4.5 % by weight, based on the weight of component (a).

18. A polymerization lacquer as claimed in Claim 9, characterized in that it contains as elasticity modifier a polyurethane which has been produced from an aliphatic or aromatic di- or triisocyanate and a long-chain polyol, polyether and/or polyether polyol, optionally in the presence of a reaction accelerator, with formation of a prepolymer containing free isocyanate groups and subsequent reaction of the prepolymer to saturation with a polyol, polyether polyol, amine, polyamine and/or caprolactone acrylate.

19. A polymerization lacquer as claimed in Claim 18, characterized in that it contains an elasticity modifier in a quantity of up to 25 % by weight, based on the weight of component (a).

20. A polymerization lacquer as claimed in Claims 9 to 19, characterized in that it contains lacquer auxiliaries in a total quantity of up to 35 % by weight, based on the weight of component (a).

21. A polymerization lacquer as claimed in Claims 1 to 20, characterized in that it contains chromium oxide yellow and/or transparent organic yellow dyes as additional pigment and/or as dye.

22. A polymerization lacquer as claimed in Claims 1 to 21, characterized in that it contains light-reflecting glass beads on its surface.

23. A polymerization lacquer as claimed in Claim 22, characterized in that it contains glass beads having a diameter of 5 to 600 µm.

24. The use of the solventless polymerization lacquer claimed in Claims 1 to 23 for applying markings to roads and squares.

**Revendications**

1. Vernis-laque polymérisable sans solvant, à base :

(a) de résines de polyesters insaturés et de monomères pouvant polymériser avec, comme agent de réticulation,

(b) de photo-amorceurs,

(c) de pigments,

(d) de charges conductrices de la lumière et, éventuellement,

(e) d'adjuvants pour la préparation de vernis-laques,

produit caractérisé en ce que le vernis-laque polymérisable contient comme composant (b) de la 2-hydroxy-2-méthyl-1-phénylpropane-1-one et/ou un oxyde d'acylphosphine, comme composant (c) un pigment blanc choisi dans l'ensemble formé par du titanate de magnésium ($MgTiO_3$) et du bioxyde de titane ($TiO_2$) du type anatase et leurs mélanges, et comme composant (d) du feldspath, du talc, qui sont pratiquement dépourvus de composés du fer et d'autres composés de métaux lourds, de la farine de quartz, de la farine de verre, de la farine de fibres de verre, de l'hydroxyde d'aluminium, de la poudre de silicate d'aluminium et/ou de la farine de verre de borosilicate, la proportion volumétrique des charges (d) conductrices de la lumière constituant le quintuple à au moins le triple de la proportion volumétrique des pigments (c).

2. Vernis-laque polymérisable selon la revendication 1, caractérisé en ce que la résine de polyester insaturé provient d'acides dicarboxyliques saturés et insaturés et/ou de leurs anhydrides et de diols, le rapport entre les acides dicarboxyliques saturés et les acides dicarboxyliques insaturés se situant entre 5 : 1 et 5 : 10.

3. Vernis-laque polymérisable selon les revendications 1 à 2, caractérisé en ce que l'agent de réticulation des résines de polyesters insaturés est constitué par au moins un composé vinylique aromatique et/ou aliphatique et est présent en une proportion de 20 à 75 % en poids, par rapport au poids des résines de polyesters.

4. Vernis-laque polymérisable selon les revendications 1 à 3, caractérisé en ce qu'il contient, comme oxyde d'acylphosphine, un composé de formule générale

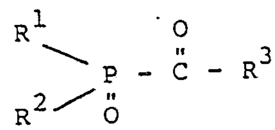

dans laquelle,

$R^1$ représente un reste alkyle linéaire ou ramifié ayant 1 à 6 atomes de carbone, un reste cyclohexyle, cyclopentyle, aryle, un reste aryle (substitué par de l'halogène, par un groupe alkyle ou alcoxy), un reste hétérocyclique pentagonal ou hexagonal contenant S ou N ;

$R^2$ a le sens de $R^1$, $R^1$ et $R^2$ pouvant être identiques ou différents, ou bien $R^2$ représente un reste alcoxy ayant 1 à 6 atomes de carbone, un reste aryloxy ou arylalcoxy, ou bien $R^1$ et $R^2$ forment avec l'atome de phosphore un noyau ;

$R^3$ représente un reste alkyle linéaire ou ramifié ayant 2 à 18 atomes de carbone, un reste cycloaliphatique contenant 3 à 10 atomes de carbone, un reste phényle ou naphtyle, un reste hétérocyclique pentagonal ou hexagonal contenant S, O ou N, les restes $R^3$ pouvant éventuellement porter d'autres substituants, ou bien $R^3$ représente le groupement :

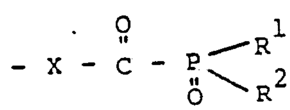

dans lequel $R^1$ et $R^2$ ont le sens précité et X représente un reste phényle ou un reste divalent, aliphatique ou cycloaliphatique, contenant 2 à 6 atomes de carbone, et éventuellement un ou plusieurs des restes $R^1$ à $R^3$ présentent de l'insaturation oléfinique.

5. Vernis-laque polymérisable selon la revendication 4, caractérisé en ce qu'il contient en outre, comme photo-amorceur, un dialkylcétal de benzile et/ou de la méthylthioxanthone.

6. Vernis-laque polymérisable selon les revendications 4 à 5, caractérisé en ce que le rapport pondéral de l'oxyde d'acylphosphine et/ou de la 2-hydroxy-2-méthyl-1-phényl-propane-1-one au photo-amorceur supplémentaire vaut au maximum 3 : 1.

7. Vernis-laque polymérisable selon les revendications 1 à 6, caractérisé en ce que le rapport pondéral entre le composant (a) et le composant (b) se situe entre 100 : 0,5 et 100 : 5.

8. Vernis-laque polymérisable selon les revendications 1 à 7, caractérisé en ce qu'il présente une proportion de 20 à 120 parties en poids des composants (c) et (d) pour 100 parties en poids du composant (a).

9. Vernis-laque polymérisable selon les revendications 1 à 8, caractérisé en ce qu'il contient, comme adjuvant de préparation du vernis-laque, des agents empêchant un dépôt, des agents de formation d'une peau, des agents de matité, des agents épaississants, des agents de modification de l'élasticité et/ou des colorants.

10. Vernis-laque polymérisable selon la revendication 9, caractérisé en ce qu'il contient de l'acide silicique hautement dispersé comme agent destiné à empêcher un dépôt, comme agent de matité et/ou

comme épaississant.

11. Vernis-laque polymérisable selon la revendication 10, caractérisé en ce qu'il contient, en une proportion de 0,05 à 5 % en poids, par rapport au poids du composant (a), de l'acide silicique hautement dispersé.

12. Vernis-laque polymérisable selon les revendications 9 à 11, caractérisé en ce qu'il contient, comme agent destiné à empêcher un dépôt, de l'huile de ricin déshydratée et/ou des bentonites.

13. Vernis-laque polymérisable selon la revendication 9, caractérisé en ce qu'il contient, comme agent de formation d'une peau, des cires, des cires de polyéthylène et/ou des paraffines ayant un poids de fusion compris entre 46 et 72 °C.

14. Vernis-laque polymérisable selon la revendication 13, caractérisé en ce qu'il contient l'agent de formation d'une peau présent en une proportion de 0,5 à 4 % en poids, par rapport au poids du composant (a).

15. Vernis-laque polymérisable selon les revendications 13 et 14, caractérisé en ce qu'il contient de la cire dissoute dans l'agent de réticulation.

16. Vernis-laque polymérisable selon les revendications 9 à 11, caractérisé en ce qu'il contient comme épaississant de la poudre d'oxyde de magnésium.

17. Vernis-laque polymérisable selon la revendication 16, caractérisé en ce qu'il contient un épaississant présent en une proportion de 0,05 à 4,5 % en poids, par rapport au poids du composant (a).

18. Vernis-laque polymérisable selon la revendication 9, caractérisé en ce qu'il contient, comme agent de modification de l'élasticité, un polyuréthanne qui a été préparé à partir d'un diisocyanate ou d'un triisocyanate aliphatique ou aromatique et d'un polyol, d'un polyéther et/ou d'un polyéther polyol à longues chaînes, éventuellement en présence d'un accélérateur de réaction, avec formation d'un prépolymère présentant des groupes isocyanates libres, puis réaction du prépolymère, jusqu'à saturation, avec un polyol, un polyéther polyol, une amine, une polyamine et/ou de l'acrylate de caprolactone.

19. Vernis-laque polymérisable selon la revendication 18, caractérisé en ce qu'il contient un agent de modification de l'élasticité, présent en une proportion pouvant aller jusqu'à 25 % en poids, par rapport au poids du composant (a).

20. Vernis-laque polymérisable selon les revendications 9 à 19, caractérisé en ce qu'il contient des adjuvants de formation de vernis-laques, présents en une proportion totale pouvant aller jusqu'à 35 % en poids, par au poids du composant (a).

21. Vernis-laque polymérisable selon les revendications 1 à 20, caractérisé en ce qu'il contient, comme pigment supplémentaire et/ou comme colorant, du jaune d'oxyde de chrome et/ou des colorants organiques jaunes transparents.

22. Vernis-laque polymérisable selon les revendications 1 à 21, caractérisé en ce qu'il contient à sa surface de petites billes de verre capables de réfléchir la lumière.

23. Vernis-laque polymérisable selon la revendication 22, caractérisé en ce qu'il contient de petites billes de verre ayant un diamètre de 5 à 600 µm.

24. Utilisation du vernis-laque polymérisable sans solvant selon les revendications 1 à 23 pour l'application de marquages sur des voies, rues, routes et places.